# NEUE EUROPÄISCHE PATENTSCHRIFT

(11) **EP 1 998 999 B2**
(45) Veröffentlichungstag und Bekanntmachung des Hinweises auf die Entscheidung über den Einspruch: **15.03.2017**
(45) Hinweis auf die Patenterteilung: 05.10.2011
(21) Anmeldenummer: 07727232.6
(22) Anmeldetag: 22.03.2007
(51) Int. Cl.: B61D 27/00, B60H 1/26

(54) **LUFTEINLASSBAUTEIL FÜR EINE KLIMATISIERUNGSEINRICHTUNG EINES SCHIENENFAHRZEUGS UND MIT DEM LUFTEINLASSBAUTEIL AUSGESTATTETES SCHIENENFAHRZEUG**
AIR INLET COMPONENT FOR AN AIR-CONDITIONING DEVICE OF A RAIL VEHICLE AND A RAIL VEHICLE WHICH IS EQUIPPED WITH THE AIR INLET COMPONENT
COMPOSANT D'ADMISSION D'AIR POUR DISPOSITIF DE CLIMATISATION D'UN VEHICULE FERROVIAIRE ET VEHICULE FERROVIAIRE EQUIPE D'UN COMPOSANT D'ADMISSION D'AIR

(30) Priorität: 27.03.2006 DE 102006014041
(43) Veröffentlichungstag der Anmeldung: 10.12.2008
(73) Patentinhaber: Siemens Aktiengesellschaft, 80333 München (DE)
(72) Erfinder: WANCZURA, Stefan, 45665 Recklinghausen (DE)
(86) Internationale Anmeldenummer: PCT/EP2007/052757
(87) Internationale Veröffentlichungsnummer: WO 2007/110369

(56) Entgegenhaltungen:
- DE-A1- 19 913 776
- GB-A- 508 807
- US-A- 1 712 180

## Beschreibung

Die Erfindung bezieht sich auf ein Lufteinlassbauteil nach den Oberbegriff von Anspruch 1. Ein solches Lufteinlassventil ist aus der US 1,872,007 A bekannt. Ein weiteres Lufteinlassbauteil ist aus der US 1,712,180 A bekannt. Außerdem bezieht sich die Erfindung auf ein mit einem solchen Lufteinlassbauteil ausgestattetes Schienenfahrzeug. Ein solches Schienenfahrzeug ergibt sich zum Beispiel aus der US 1,720,858 A.

Ebenfalls zum einschlägigen Stand der Technik gehört die DE 199 13 776 A1, aus der sich insbesondere ein Schienenfahrzeug mit einer Klimatisierungseinrichtung ergibt, die einen Frischlufteinlassschacht zur Zuführung von Frischluft von außerhalb des Schienenfahrzeugs in dessen Innenraum und ein Lufteinlassbauteil zum äußeren Abschluss des Frischluft-Einlassschachtes aufweist.

Es ist bekannt, Frischluft-Einlassschächte von Schienenfahrzeugen auf deren Außenseite mit einem Lüftungsgitter als Lufteinlassbauteil abzuschließen. Ein solches Lüftungsgitter hat mehrere Funktionen, unter anderem die Abscheidung von Schmutz, Wasser und Schnee. Außerdem bewirkt das Lüftungsgitter eine Lärmreduktion, so dass auftretende Lüftungsgeräusche in verminderter Intensität in einen Innenraum des Schienenfahrzeugs gelangen. Typischerweise wird die durch den Frischluft-Einlassschacht zugeführte Frischluft mit Hilfe eines Lüfters durch das Lüftungsgitter hindurch angesaugt. Da das Lüftungsgitter üblicher Weise im Dach- oder Seitenwandbereich eines Schienenfahrzeugs angeordnet ist, entsteht häufig durch die Frischluftanströmung ein leichter Unterdruck auf einer Außenseite des Lufteinlassbauteils. Dementsprechend muss der Lüfter zum Ansaugen von Frischluft auch den zusätzlichen Widerstand überwinden, der sich .durch den entstehenden Unterdruck auf der Außenseite des Lufteinlassbauteils ergibt. Auch im Lüftungsgitter selbst sowie in stromaufwärts befindlichen Strömungskanälen entstehen Druckverluste durch Kanalumlenkungen, welche bei der Auslegung der Leistungsfähigkeit des Lüfters berücksichtigt werden müssen.

Ausgehend hiervon liegt der Erfindung die Aufgabe zugrunde, ein Lufteinlassbauteil zum äußeren Abschluss eines Frischluft-Einlasssehachtes bereitzustellen, welches für den Lüfter günstigere Druckverhältnisse ermöglicht, sowie ein Schienenfahrzeug anzugeben, dessen Klimatisierungseinrichtung hinsichtlich der Erfordernisse an eine Leistungsfähigkeit ihres Lüfters vermindert werden kann.

Die Aufgabe wird bei dem eingangs genannten Lufteinlassbauteil durch die kennzeichnenden Merkmale des Anspruchs 1 gelöst.

Aufgrund der Ausbildung des Lufteinlassbauteils als Blende mit einer Eintrittsöffnung parallel zu einer Blendengrundfläche ist es möglich, das Lufteinlassbauteil auf eine Eintrittsöffnung eines Frischlüft-Einlassschachtes eines Schienenfahrzeugs aufzusetzen. Da dieser Frischluft-Einlassschacht typischer Weise von einem Dach- oder Seitenwandbereich des Schienenfahrzeugs ausgeht, ist es durch geeignete Ausrichtung des Lufteinlassbauteils möglich, die Ausrichtung der Eintrittsöffnung des Strömungskanals präzise an die Frischluft-Strömungsrichtung außerhalb des Schienenfahrzeugs anzupassen. Die Strömungsrichtung der Frischluft verläuft bekannter Weise im Wesentlichen parallel zu einer Dach- oder Seitenfläche in Längsrichtung des Schienenfahrzeugs. Dabei gestattet es das Lufteinlassbauteil, Frischluft von außen in den Frischluft-Einlassschacht einzuleiten, ohne dass auf einer Eintrittsseite der Frischluft ein Unterdruck entsteht. Vielmehr kann damit gerechnet werden, dass sich ggf. ein Überdruck an dieser Stelle ergibt, so dass sich ein einzusetzender Lüfter in seinem Leistungsvermögen gering bemessen lässt.

Für die äußere Formgebung des Strömungskanals des Lufteinlassbauteils ist vorgesehen, dass die Eintrittsöffnung einen Querschnitt entsprechend einer halben Kreisfläche aufweist, und sich der Strömungskanal von der Eintrittsöffnung aus verjüngt und in einer Austrittsöffnung mündet. Aufgrund der Verjüngung des Strömungskanals wird eine Druckerhöhung in Strömungsrichtung der Frischluft erzielt, die für eine günstige Leistungsauslegung des Lüfters von Vorteil ist.

Das Lufteinlassbauteil weist wenigstens einen Strömungskanal zweiter Art auf, dessen Eintrittsöffnung der Eintrittsöffnung des Strömungskanal erster Art im Wesentlichen entgegengesetzt ausgerichtet ist. Dies hat den Vorteil, dass in -dem Anwendungsfall des Lufteinlassbauteils bei einem Schienenfahrzeug, unabhängig von einer Fortbewegungsrichtung des Schienenfahrzeugs auf einem Gleis, wenigstens ein Strömungskanals derart ausgerichtet ist, dass anströmende Frischluft aufgrund der Fortbewegung des Schienenfahrzeugs in ihn hinein gepresst wird. Hinzu kommt, dass auch derjenige Strömungskanal, der entgegen der Fahrtwindrichtung ausgerichtet ist, zur Zuführung von Frischluft in den Frischluft-Einlassschacht beiträgt.

Es ist vorgesehen, dass es mehrere Strömungskanäle erster Art und mehrere Strömungskanäle zweiter Art gibt, deren Eintrittsöffnungen jeweils parallel zueinander ausgerichtet sind. Im Einzelnen kann das als Blende ausgeführt Lufteinlassbauteil eine übereinstimmende Anzahl von Strömungskanälen erster Art und zweiter Art aufweisen, so dass für jede Fahrtrichtung des Schienenfahrzeugs günstige Druckverhältnisse bezüglich des Lüfters zur Klimatisierung eines Innenraums des Schienenfahrzeugs vorliegen. Gerade bei höheren Fahrgeschwindigkeiten wird der Lüfter kaum beansprucht werden. Für niedrige Fahrgeschwindigkeiten ist sein Einsatz wegen des geringeren Drucks am Einlassschacht jedoch unabdingbar.

Die Strömungskanäle erster Art und die Strömungskanälen zweiter Art sind jeweils in Gruppen angeordnet, deren zugehörige Strömungskanäle entsprechend der Ausrichtung ihrer Lufteinlassöffnungen hintereinander angeordnet sind. Beispielsweise können zwei Strömungskanale erster Art und/oder zweiter Art, die dann jeweils eine Gruppe bilden, die dann jeweils eine Gruppe bilden, in Fahrtrichtung des Schienenfahrzeugs bzw. der Fahrtrichtung des Schienenfahrzeugs entgegengesetzt hintereinander angeordnet sein.

Die Gruppen von Strömungskanälen erster Art und die Gruppen von Strömungskanälen zweiter Art sind einander abwechselnd nebeneinander angeordnet. Dies hat den Vorteil, -dass die Strömungskanälen unter Ausnutzung der Verjüngung ihrer Querschnitte ineinander verschachtelt vorgesehen sind. In dieser Weise lässt sich eine günstige Größe für eine jeweilige Gesamteintrittsfläche für Frischluft durch die Strömungskanäle erster und zweiter Art verwirklichen.

Aufgrund der komplexen Formgebung der Strömungskanäle kann es günstig sein, dass das Lufteinlassbauteil aus Kunststoff hergestellt ist, und zwar typischer Weise im Rahmen eines Gussverfahrens.

Die o. g. Aufgabe wird hinsichtlich des Schienenfahrzeugs gelöst durch ein Schienenfahrzeug mit den Merkmalen des Patentanspruchs 3.

Angesichts der bereits oben angegebenen Beschreibung des Lufteinlassbauteils liegen die Vorteile eines solchen Schienenfahrzeugs im Hinblick auf seine Klimatisierung auf der Hand. Das Lufteinlassbauteil kann in der oben beschriebenen Weise weiter entwickelt sein, so dass es in einem bevorzugten Ausführungsbeispiel Gruppen von Strömungskanälen erster und zweiter Art aufweist, die ineinander verschachtelt angeordnet sind.

Bei einer ersten Ausführungsform des Schienenfahrzeugs kann das Lufteinlassbauteil von einer Außenhaut des Schienenfahrzeugs aus vorstehen, was insbesondere den Fall betrifft, dass möglichst wenige Modifikationen an bestehenden Dach- bzw. Seitenwandkonstruktionen für Schienenfahrzeuge erforderlich sind, um das Lufteinlassbauteil einbauen zu können.

Im Hinblick auf günstige Strömungsverhältnisse ist es jedoch bevorzugt, wenn das Lufteinlassbauteil zu einer Außenhaut des Schienenfahrzeugs bündig angeordnet ist, d. h. seitlich nicht über die Außenhaut des Schienenfahrzeugs hinaus ragt.

Ausführungsbeispiele der Erfindung werden nachfolgend anhand der Zeichnungen noch näher erläutert. Es zeigen:
- Figur 1: eine perspektivische Ansicht von oben auf ein Lufteinlassbauteil zum Abschluss eines Frischluft-Einlassschachtes,
- Figur 2: eine Querschnittsansicht eines Lufteinlass-Bauteils entlang einer Linie A-A von Figur 1,
- Figur 3: eine Querschnittsansicht eines Lufteinlassbauteils gemäß einer Linie B-B von Figur 1 in Kombination mit einem angrenzenden Außenhautabschnitt eines Schienenfahrzeugs,
- Figur 4: eine Querschnittsansicht eines Lufteinlassbauteils gemäß einer Linie B-B von Figur 1 in zu Figur 3 alternativer Kombination mit einem Außenhautabschnitt eines Schienenfahrzeugs.

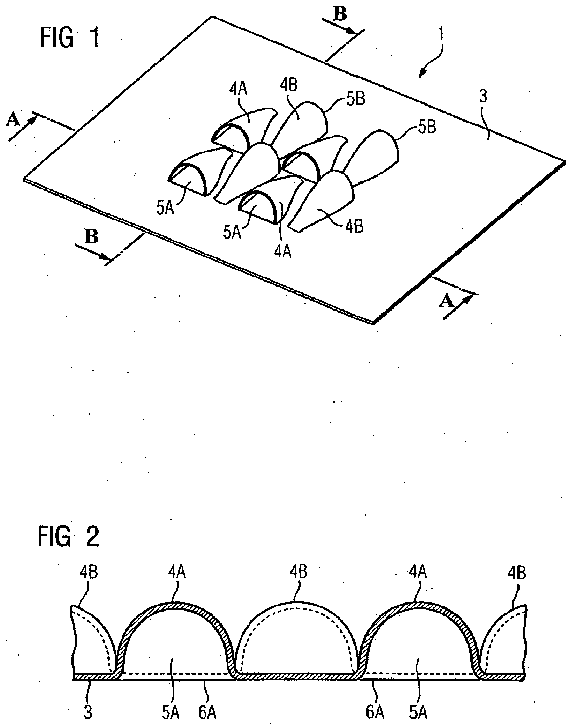

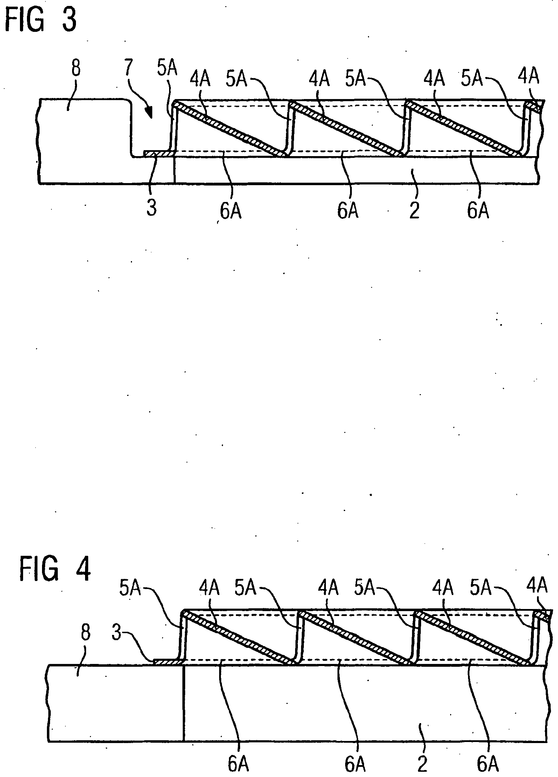

Das in Figur 1 dargestellte Lufteinlassbauteil ist als Lufteinlassblende 1 ausgeführt, die zum Verschließen eines Frischluft-Einlasskanals 2 (vgl. Figuren 3 und 4) dient. Die aus ggf. faserverstärktem Kunststoff hergestellte Lufteinlassblende 1 besitzt eine im Wesentlichen rechtwinklige Grundfläche 3, deren äußere Abmessungen an einen vorliegenden Querschnitt des Frischluft-Einlassschachtes 2 angepasst sind.

Die Lufteinlassblende 1 zeigt eine Mehrzahl von Strömungskanälen 4A, 4B, die sich in ihrer Art insofern unterscheiden, dass eine Ausrichtung ihrer zugehörigen Eintrittsöffnungen 5A, 5B entgegengesetzt ist.

In der Figur 1 liegen zwei Gruppen von Strömungslanälen 4A einer ersten Art vor, deren Eintrittsöffnungen 5A sämtlich parallel zueinander ausgerichtet sind. Dabei liegen in jeder Gruppe von Strömungskanälen 4A der ersten Art zwei Strömungskanäle hintereinander.

Weitere zwei Gruppen von Strömungskanälen 4B der zweiten Art sind ebenso ausgebildet und angeordnet, wie die Strömungskanäle 4A der ersten Art und liegen abwechselnd mit den Gruppen von Strömungskanälen 4A der ersten Art in Querrichtung des Lufteinlassbauteils 1 nebeneinander.

Jeder Strömungskanal 4A, 4B zeigt einen Querschnitt entsprechend einer halben Kreisfläche für seine zugehörige Eintrittsöffnung 5A, 5B (vgl. Fig. 2). Von dieser Eintrittsöffnung 5A, 5B aus verjüngt sich der Strömungskanal 4A, 4B. Die Strömungskanäle 4A, 4B münden in Austrittsöffnungen 6A, 6B, die jeweils in der Grundfläche 3 der Lufteinlassblende 1 vorgesehen sind und sich bei dem dargestellten Ausführungsbeispiel über eine gesamte Länge und Breite des jeweiligen Strömungskanals 4A, 4B erstrecken.

In den Figuren 3 und 4 sind zwei verschiedene Einbausituationen für die Lufteinlassblende 1 aus Figur 1 jeweils im Schnitt der Linie B-B gezeigt. In Figur 3 ist für eine Aufnahme der Lufteinlassblende 1 eine Vertiefung 7 vorgesehen, die derart bemessen ist, dass die Lufteinlassblende 1 bündig mit der angrenzenden Außenhaut 8, im vorliegenden Fall eines Schienenfahrzeugs, abschließt. Für diese Anordnung der Lufteinlassblende 1 haben sich besonders günstige Wirkungsgrade messen lassen, die insbesondere für eine Leistungsauslegung eines hier nicht dargestellten Lüfters bedeutsam sind.

Der Lüfter hat die Funktion, von außen einströmende Frischluft, die über die Strömungskanäle 4A, 4B in den Frischluft-Einlassschacht 2 gelangt, weiter in einen Innenraum des Schienenfahrzeugs zu transportieren. Anwendungsfälle sind eine Klimatisierung eines Fahrgastraumes oder auch eine Fahrmotorbelüftung. Dabei können die Einbaustellen der Lufteinlassblende 1 in den Figuren 3 und 4 in einem Dach- oder Seitenwandbereich des Schienenfahrzeugs vorgesehen sein. Die Ausrichtung der Strömungskanäle 4A, 4B ist so gewählt, dass sie entsprechend einer Fortbewegungsrichtung des Schienenfahrzeugs liegen.

Bei der in Figur 4 dargestellten Einbausituation für die Lufteinlassblende 1, bei der die Außenhaut 8 keine Ausnehmung aufweist, ist die Lufteinlassblende 1 auf die Außenhaut 8 unmittelbar ausgesetzt, so dass sie von einer Seitenwand oder einem Dach des Schienenfahrzeugs aus vorsteht. Auch bei dieser Ausführungsform ergeben sich im Vergleich zum Stand der Technik günstigere Strömungsverhältnisse.

Für beide dargestellten Einbausituationen der Lufteinlassblende 1 gilt, dass zusätzlich noch ein in den Figuren nicht dargestelltes Lüftungsgitter vorgesehen werden kann, sofern die Lufteinlassblende 1 deren Funktionen nicht in ausreichender Weise übernehmen kann, was beispielsweise die Abscheidung von Schnee, Wasser oder Schmutzpartikeln angeht. Ein solches Lüftungsgitter wäre dann auf einer Ausgangsseite der Lufteinlassblende 1 am äußeren Ende des Frischluft-Einlassschachtes 2 vorzusehen.

## Patentansprüche

1. Lufteinlassbauteil zum äußeren Abschluss eines Frischluft-Einlassschachtes (2), insbesondere eines Schienenfahrzeugs, wobei es als Blende mit einer Blendengrundfläche (3) ausgebildet ist, die wenigstens einen Strömungskanal (4A) erster Art zum Führen von Frischluft in den Frischluft-Einlassschacht (2) aufweist, dessen Eintrittsöffnung (5A, 5B) im Wesentlichen parallel zu der Blendengrundfläche (3) ausgerichtet ist,
wobei sich der Strömungskanal (4A, 4B) von der Eintrittsöffnung (5A, 5B) aus verjüngt und in einer Austrittsöffnung (6A, 6B) mündet, es wenigstens einen Strömungskanal (4A, 4B) zweiter Art aufweist, dessen Eintrittsöffnung (5A, SB) der Eintrittsöffnung (5A, 5B) des ersten Strömungskanals (4A, 4B) im wesentlichen entgegengesetzt ausgerichtet ist, es mehrere Strömungskanäle (4A, 4B) erster Art und mehrere Strömungskanäle (4A, 4B) zweiter Art aufweist, deren Eintrittsöffnungen (5A, 5B) jeweils parallel zueinander ausgerichtet sind, und die Strömungskanäle (4A, 4B) erster Art und die Strömungskanäle (4A, 4B) zweiter Art jeweils in Gruppen angeordnet sind, deren zugehörige Strömungskanäle (4A, 4B) entsprechend der Ausrichtung ihrer Lufteinlassöffnungen hintereinander angeordnet sind,
wobei ferner die Gruppen von Strömungskanälen (4A, 4B) erster Art und die Gruppen von Strömungskanälen (4A, 4B) zweiter Art einander abwechselnd nebeneinander angeordnet sind,
**dadurch gekennzeichnet, dass**
die Eintrittsöffnung (5A, 5B) einen Querschnitt entsprechend einer halben Kreisfläche aufweist und die Strömungskanäle (4A, 4B) erster Art und die Strömungskanäle (4A, 4B) zweiter Art ineinander verschachtelt angeordnet sind.

2. Lufteinlassbauteil nach Anspruch 1,
**dadurch gekennzeichnet,**
**dass** es aus Kunststoff hergestellt ist.

3. Schienenfahrzeug mit einer Klimatisierungseinrichtung, die einen Frischluft-Einlassschacht (2) zur Zuführung von Frischluft von außerhalb des Schienenfahrzeugs in dessen Innenraum und ein Lufteinlassbauteil zum äußeren Abschluss des Frischluft-Einlassschachtes (2) aufweist,
wobei es als Blende mit einer Blendengrundflache (3) ausgebildet ist, die wenigstens einen Strömungskanal (4A) erster Art zum Führen von Frischluft in den Frischluft-Einlassschacht (2) aufweist, dessen Eintrittsöffnung (5A, 5B) im Wesentlichen parallel zu der Blendengrundfläche (3) ausgerichtet ist,
**dadurch gekennzeichnet,**
**dass** die Eintrittsöffnung (5A, 5B) einen Querschnitt entsprechend einer halben Kreisfläche aufweist und dass sich der Strömungskanal (4A, 4B) von der Eintrittsöffnung (5A, 5B) aus verjüngt und in einer Austrittsöffnung (6A, 6B) mündet, das Lufteinlassbauteil wenigstens einen Strömungskanal (4A, 4B) zweiter Art aufweist, dessen Eintrittsöffnung (5A, 5B) der Eintrittsöffnung (5A, 5B) des ersten Strömungskanals (4A, 4B) im wesentlichen entgegengesetzt ausgerichtet ist, das Lufteinlassbauteil mehrere Strömungskanäle (4A, 4B) erster Art und mehrere Strömungskanäle (4A, 4B) zweiter Art aufweist, deren Eintrittsöffnungen (5A, 5B) jeweils parallel zueinander ausgerichtet sind, und die Strömungskanäle (4A, 4B) erster Art und die Strömungskanäle (4A, 4B) zweiter Art jeweils in Gruppen angeordnet sind, deren zugehörige Strömungskanäle (4A, 4B) entsprechend der Ausrichtung ihrer Lufteinlassöffnungen hintereinander angeordnet sind, wobei ferner die Gruppen von Strömungskanälen (4A, 4B) erster Art und die Gruppen von Strömungskanälen (4A, 4B) zweiter Art einander abwechselnd nebeneinander anbeordnet sind und die Strömungskanäle (4A, 4B) erster Art und die Strömungskänale (4A, 4B) zweiter Art ineinander verschaltet angeordnet sind.

4. Schienenfahrzeug nach Anspruch 3,
**dadurch gekennzeichnet,**
**dass** das Lufteinlassbauteil von einer Außenhaut (8) des Schienenfahrzeugs aus vorsteht.

5. Schienenfahrzeug nach Anspruch 3,
**dadurch gekennzeichnet,**
**dass** das Lufteinlassbauteil zu einer Außenhaut (8) des Schienenfahrzeugs bündig angeordnet ist.

## Claims

1. Air inlet component for external termination of a fresh air inlet shaft (2), in particular of a rail vehicle, wherein said air inlet component is embodied as a shutter which has a shutter base surface (3) and at least one flow duct (4A) of a first type for conducting fresh air into the fresh air inlet shaft (2), the inlet opening (5A, 5B) of which air inlet component is oriented essentially parallel to the shutter base surface (3),
wherein
the flow duct (4A, 4B) tapers from the inlet opening (5A, 5B) and opens into an outlet opening (6A, 6B), said air inlet component has at least one flow duct (4A, 4B) of a second type, the air inlet opening (5A, 5B) of which is oriented essentially opposite the inlet opening (5A, 5B) of the first flow duct (4A, 4B), said air inlet component has multiple flow ducts (4A, 4B) of a first type and multiple flow ducts (4A, 4B) of a second type, the inlet openings (5A, 5B) of which are respectively oriented parallel to one another, and the flow ducts (4A, 4B) of a first type and the flow ducts (4A, 4B) of a second type are respectively arranged in groups whose associated flow ducts (4A, 4B) are arranged one behind the other in accordance with the orientation of their air inlet openings,
wherein furthermore the groups of flow ducts (4A, 4B) of the first type and the groups of flow ducts (4A, 4B) of the second type are arranged one next to the other in an alternating fashion
**characterized in that** the inlet opening (5A, 5B) has a cross section corresponding to half a circular area, and the flow ducts (4A, 4B) of the first type and the flow ducts (4A, 4B) of the second type are arranged interleaved one in the other.

2. Air inlet component according to Claim 1,
**characterized**
**in that** said air inlet component is manufactured from plastic.

3. Rail vehicle having an air conditioning device which has a fresh air inlet shaft (2) for feeding in fresh air from outside the rail vehicle into the interior thereof, and an air inlet component for externally terminating the fresh air inlet shaft (2),
wherein said air inlet component is embodied as a shutter, having a shutter base surface (3), which has at least one flow duct (4A) of a first type for conducting fresh air into the fresh air inlet shaft (2), the inlet opening (5A, 5B) of which air inlet component is oriented essentially parallel to the shutter base surface (3),
**characterized**
**in that** the inlet opening (5A, 5B) has a cross section corresponding to half a circular area, and in that the flow duct (4A, 4B) tapers from the inlet opening (5A, 5B) and opens into an outlet opening (6A, 6B), said air inlet component has at least one flow duct (4A, 4B) of a second type, the air inlet opening (5A, 5B) of which is oriented essentially opposite the inlet opening (5A, 5B) of the first flow duct (4A, 4B), said air inlet component has multiple flow ducts (4A, 4B) of a first type and multiple flow ducts (4A, 4B) of a second type, the inlet openings (5A, 5B) of which are respectively oriented parallel to one another, and the flow ducts (4A, 4B) of a first type and the flow ducts (4A, 4B) of a second type are respectively arranged in groups whose associated flow ducts (4A, 4B) are arranged one behind the other in accordance with the orientation of their air inlet openings,
wherein furthermore the groups of flow ducts (4A, 4B) of the first type and the groups of flow ducts (4A, 4B) of the second type are arranged one next to the other in an alternating fashion and the flow ducts (4A, 4B) of the first type and the flow ducts (4A, 4B) of the second type are arranged interleaved one in the other.

4. Rail vehicle according to Claim 3,
**characterized**
**in that** the air inlet component protrudes from an outer skin (8) of the rail vehicle.

5. Rail vehicle according to Claim 3,
**characterized**
**in that** the air inlet component is arranged flush with an outer skin (8) of the rail vehicle.

## Revendications

1. Composant d'admission d'air pour la fermeture vis-à-vis de l'extérieur d'un puits (2) d'admission d'air frais, notamment d'un véhicule ferroviaire, dans lequel
il est constitué sous la forme d'un écran, qui a au moins un canal (4A) d'écoulement d'un premier type pour le passage d'air frais dans le puits (2) d'admission d'air frais, dont l'ouverture (5A, 5B) d'entrée est dirigée sensiblement parallèlement à une surface (3) de base de l'écran,
dans lequel
le canal (4A, 4B) d'écoulement se rétrécit à partir de l'ouverture (5A, 5B) d'entrée et débouche dans une ouverture (6A, 6B) de sortie, a au moins un canal (4A, 4B) d'écoulement d'un deuxième type, dont l'ouverture (5A, 5B) d'entrée est dirigée de manière sensiblement opposée à l'ouverture (5A, 5B) d'entrée du premier canal (4A, 4B) d'écoulement, a plusieurs canaux (4A, 4B) d'écoulement du premier type et plusieurs canaux (4A, 4B) d'écoulement du deuxième type, dont les ouvertures (5A, 5B) d'entrée sont dirigées respectivement parallèlement les unes aux autres et les canaux (4A, 4B) d'écoulement du premier type et les canaux (4A, 4B) d'écoulement du deuxième type sont disposés respectivement en groupes, dont les canaux (4A, 4B) d'écoulement qui en font partie sont disposés les uns derrière les autres conformément à l'orientation de leurs ouvertures d'admission d'air, dans lequel en outre les groupes de canaux (4A, 4B) d'écoulement du premier type et les groupes de canaux (4A, 4B) d'écoulement du deuxième type sont disposés les uns à côté des autres en alternance,
**caractérisé en ce que** l'ouverture (5A, 5B) d'entrée a une section transversale correspondant à la moitié d'une surface circulaire et les canaux (4A, 4B) d'écoulement du premier type et les canaux (4A, 4B) d'écoulement du deuxième type sont emboîtés les uns dans les autres.

2. Composant d'admission d'air suivant la revendication 1,
**caractérisé en ce**
**qu'**il est en matière plastique.

3. Véhicule ferroviaire, comprenant un dispositif de conditionnement d'air, qui a un puits d'admission d'air frais pour l'envoi d'air frais de l'extérieur du véhicule ferroviaire à l'intérieur, et un composant d'admission d'air pour la fermeture vis-à-vis de l'extérieur du puits (2) d'admission d'air frais,
dans lequel
le composant d'admission d'air est constitué en écran ayant une surface (3) de base, qui a au moins un canal (4A) d'écoulement d'un premier type pour le passage d'air frais dans le puits (2) d'admission d'air frais, dont l'ouverture (5A, 5B) d'entrée est orientée sensiblement parallèlement à la surface (3) de base de l'écran,
**caractérisé en ce que**
l'ouverture (5A, 5B) d'entrée a une section transversale correspondant à la moitié d'une surface circulaire et **en ce que** le canal (4A, 4B) d'écoulement se rétrécit à partir de l'ouverture (5A, 5B) d'entrée et débouche dans une ouverture (6A, 6B) de sortie, le composant d'admission d'air a au moins un canal (4A, 4B) d'écoulement d'un deuxième type, dont l'ouverture (5A, 5B) d'entrée est dirigée de manière sensiblement opposée à l'ouverture (5A, 5B) d'entrée du premier canal (4A, 4B) d'écoulement, le composant d'admission d'air a plusieurs canaux (4A, 4B) d'écoulement du premier type et plusieurs canaux (4A, 4B) d'écoulement du deuxième type, dont les ouvertures (5A, 5B) d'entrée sont dirigées respectivement parallèlement les unes aux autres et les canaux (4A, 4B) d'écoulement du premier type et les canaux (4A, 4B) d'écoulement du deuxième type sont disposés respectivement en groupes, dont les canaux (4A, 4B) d'écoulement qui en font partie sont disposés les uns derrière les autres conformément à l'orientation de leurs ouvertures d'admission d'air, dans lequel en outre les groupes de canaux (4A, 4B) d'écoulement du premier type et les groupes de canaux (4A, 4B) d'écoulement du deuxième type sont disposés les uns à côté des autres en alternance et les canaux (4A, 4B) d'écoulement du premier type et les canaux (4A, 4B) d'écoulement du deuxième type sont emboîtés les uns dans les autres.

4. Véhicule ferroviaire suivant la revendication 3,
**caractérisé en ce que**
le composant d'admission d'air fait saillie d'une peau (8) extérieure du véhicule ferroviaire.

5. Véhicule ferroviaire suivant la revendication 3,
**caractérisé en ce que**
le véhicule d'admission d'air est disposé à affleurement d'une peau (8) extérieure du véhicule ferroviaire.
